# EUROPÄISCHE PATENTSCHRIFT

(11) **EP 1 175 317 B1**
(45) Veröffentlichungstag und Bekanntmachung des Hinweises auf die Patenterteilung: **26.04.2006**
(21) Anmeldenummer: 01911412.3
(22) Anmeldetag: 02.02.2001
(51) Int. Cl.: B60S 1/34

(54) **SCHEIBENWISCHERARM**
WIPER ARM
BRAS D'ESSUIE-GLACE

(30) Priorität: 24.02.2000 DE 10008644
(43) Veröffentlichungstag der Anmeldung: 30.01.2002
(73) Patentinhaber: ROBERT BOSCH GMBH, 70442 Stuttgart (DE)
(72) Erfinder: HEINRICH, Laurent, F-67400 Illkirch-Graffenstaden (FR); KUEHBAUCH, Gerd, 77830 Buehlertal (DE); LORENZ, Karlheinz, 76534 Baden-Baden (DE)
(86) Internationale Anmeldenummer: PCT/DE2001/000392
(87) Internationale Veröffentlichungsnummer: WO 2001/062560

(56) Entgegenhaltungen:
- EP-A- 0 770 525
- DE-A- 19 951 440

## Beschreibung

### Stand der Technik

Die Erfindung betrifft einen Scheibenwischerarm mit einem ersten Teilarm, einem zweiten Teilarm und einem Gelenk, das den ersten und den zweiten Teilarm klappbar miteinander verbindet, so daß die beiden Teilarme relativ zueinander aus einer Ausgangsstellung in eine abgeklappte Stellung verschwenkt werden können.

Einer der Teilarme des Scheibenwischerarmes ist mit einem Scheibenwischergummi versehen, und der andere Teilarm wird von einem Scheibenwischerantrieb in eine Schwenkbewegung versetzt. In der Ausgangsstellung liegt der Scheibenwischergummi auf der zu reinigenden Scheibe auf. Die beiden Teilarme werden relativ zueinander in die abgeklappte Stellung verschwenkt, um beispielsweise den Scheibenwischergummi zu ersetzen. Bei den bekannten Scheibenwischerarmen, bei denen einer der beiden Teilarme mit zwei zueinander parallelen Gelenklaschen versehen ist, die den anderen Teilarm umgreifen, wird die abgeklappte Stellung im überdehnten Zustand dadurch definiert, daß ein Steg zwischen den beiden Gelenklaschen des einen Teilarmes an dem anderen Teilarm anliegt. Nachteilig hierbei ist zum einen, daß aufgrund der sich ergebenden Linienberührung zwischen den beiden Teilarmen lokal sehr hohe Beanspruchungen entstehen können, die zur Beschädigung einer beispielsweise vorhandenen Lackschicht führen können. Nachteilig ist zum anderen, daß der eine Teilarm an dem anderen in einem Bereich anliegt, der dann, wenn die beiden Teilarme relativ zueinander ihre Ausgangsstellung einnehmen, von außen sichtbar ist, so daß eventuelle Beschädigungen ins Auge springen.

Die gemäß Art. 54 (3) EPÜ nur zur Beurteilung der Neuheit heranzuziehende EP 1 095 830 A2 offenbart einen Wischarm für ein Fahrzeug, der über ein Gelenk ein Armteil mit einem Befestigungsteil klappbar miteinander verbindet. Die Klappbewegung des Armteils gegenüber dem Befestigungsteil ist durch Anschlagmittel beschränkt, die am Armteil ein Anschlagelement und am Befestigungsteil zwei zueinander beabstandete Anschläge aufweisen. Mittels der beiden Anschläge am Befestigungsteil sind zwei Endpositionen (Montagestellung und Abklappstellung) des Armteils definiert, wobei sich eine Betriebsstellung des Armteils zwischen diesen beiden Endpositionen befindet.

Die EP 770 525 A2 offenbart einen Scheibenwischerscharm für ein Kraftfahrzeug mit einem angetriebenen ersten Teilarm und einem gegenüber dem ersten Teilarm abklappbaren zweiten Teilarm. Damit der zweite Teilarm gegenüber dem ersten Teilarm, z. B. für ein Wechseln von Scheibenwischerblättern, nicht zu weit abgeklappt wird, ist zwischen dem ersten und dem zweiten Teilarm ein gegenseitiger Anschlag vorgesehen. Hierzu weist der erste Teilarm an seiner Oberseite kurze Anschlagkanten auf, an die, in einer abgeklappten Position des zweiten Teilarms gegenüber dem ersten Teilarm, ein schmaler Rand des zweiten Teilarms anschlägt, der an einer Oberseite des zweiten Teilarms ausgebildet ist.

Die Aufgabe der Erfindung besteht darin, einen Scheibenwischerarm der eingangs genannten Art dahingehend weiterzubilden, daß die abgeklappte Stellung der beiden Teilarme relativ zueinander präzise definiert ist und es zu keinerlei Beschädigung der beiden Teilarme kommen kann, wenn diese in der abgeklappten-Stellung aneinander anliegen.

### Vorteile der Erfindung

Der erfindungsgemäße Scheibenwischerarm mit den Merkmalen des Patentanspruchs 1 hat den Vorteil, daß nunmehr separate Anschlagflächen vorgesehen sind, die im Hinblick auf die jeweiligen Anforderungen ausgelegt werden können. Zum einen kann eine vergleichsweise große Berührfläche zwischen der Nase und dem Vorsprung gewählt werden, so daß sich geringe Kontaktkräfte ergeben. Zum anderen können die Nase und der Vorsprung so angeordnet werden, daß sie beim Betrieb nicht ins Auge springen.

Eine vorteilhafte Ausgestaltung der Erfindung ergibt sich aus dem Anspruch 2.

### Zeichnungen

Die Erfindung wird nachfolgend unter Bezugnahme auf zwei Ausführungsbeispiele beschrieben, die in den beigefügten Zeichnungen dargestellt sind. In diesen zeigen:
- Figur 1 in einer abgebrochenen perspektivischen Ansicht einen Scheibenwischerarm, der nicht zeer Erfindung gehört, in der Ausgangsstellung;
- Figur 2 in einer abgebrochenen perspektivischen Ansicht den Scheibenwischerarm von Figur 1 in der abgeklappten Stellung;
- Figur 3 den Scheibenwischerarm von Figur 2 in einer weiteren perspektivischen Darstellung;
- Figur 4 in einer abgebrochenen perspektivischen Ansicht einen Scheibenwischerarm gemäß einer Ausführungsform der Erfindung in der abgeklappten Stellung;
- Figur 5 in einer schematischen Seitenansicht den Scheibenwischerarm von Figur 4; und
- Figur 6 in einer schematischen Seitenansicht den Scheibenwischerarm von Figur 5 in der Ausgangsstellung.

### Beschreibung der Ausführungsbeispiele

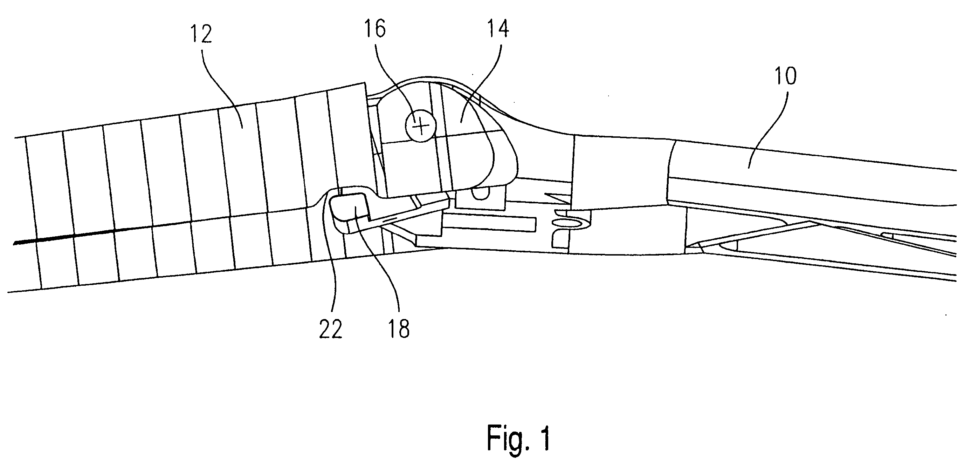

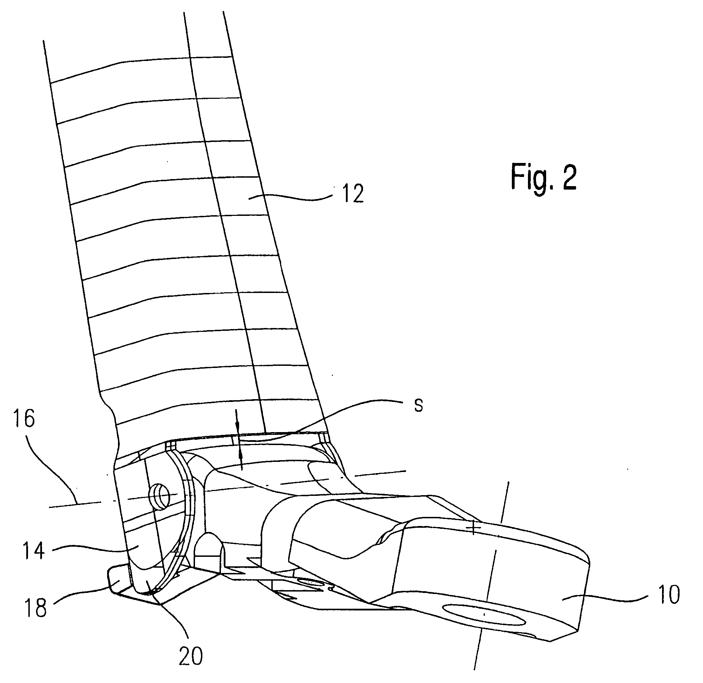

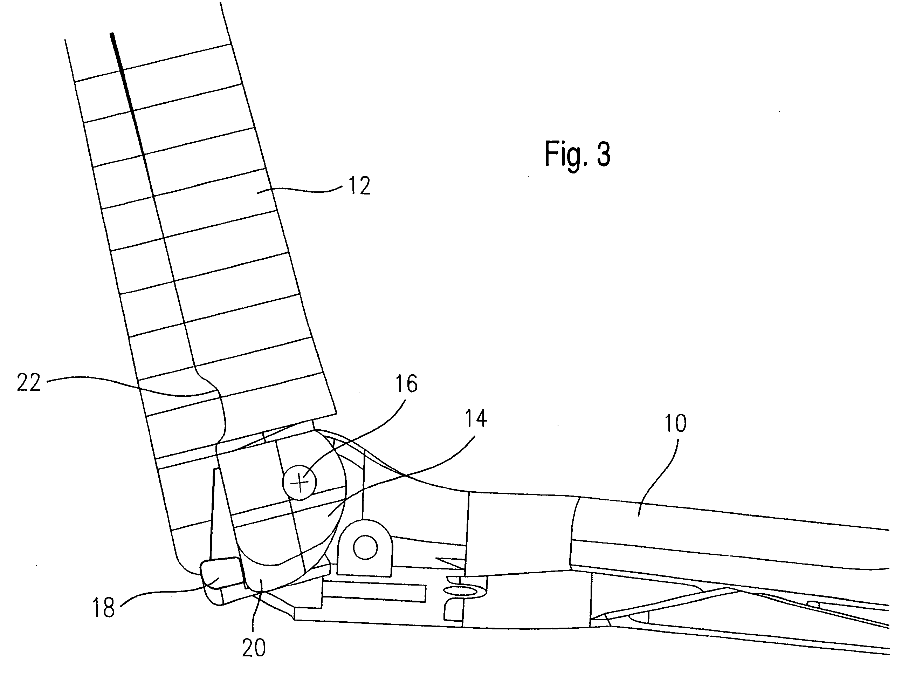

In den Figuren 1 bis 3 ist ein Scheibenwischerarm gezeigt, der nicht zur Erfindung gehört. Er besteht aus einem ersten Teilarm 10, der mit einem (nicht dargestellten) Scheibenwischerantrieb verbunden werden kann, und einem zweiten Teilarm 12, der mit einem (ebenfalls nicht dargestellten) Scheibenwischergummi versehen werden kann. Der erste Teilarm 10 ist hier als Gußteil ausgebildet, während der zweite Teilarm 12 als Blechbiegeteil mit allgemein U-förmigem Querschnitt ausgeführt ist. Der zweite Teilarm 12 weist an seinem dem ersten Teilarm 10 zugeordneten Ende zwei sich parallel zueinander erstreckende Gelenklaschen 14 auf, durch die hindurch sich ein Gelenkbolzen erstreckt, der durch seine Mittelachse 16 symbolisiert ist. Der Gelenkbolzen ist in einer entsprechenden Bohrung im ersten Teilarm 10 aufgenommen, so daß ein Gelenk gebildet ist, das es ermöglicht, den ersten und den zweiten Teilarm relativ zueinander aus der in Figur 1 gezeigten Ausgangsstellung in die in den Figuren 2 und 3 gezeigte abgeklappte Stellung zu verschwenken.

Der erste Teilarm 10 ist mit einer Nase 18 versehen, die sich in die Ebene der Gelenklasche 14 hinein erstreckt. Die entsprechende Gelenklasche 14 ist mit einem Vorsprung 20 versehen, der als Verlängerung der Gelenklasche ausgeführt ist. Die Nase 18 und der Vorsprung 20 sind so ausgestaltet, daß sie einen Anschlag bilden (siehe insbesondere Figur 3), der die abgeklappte Stellung der beiden Teilarme 10, 12 definiert. Vorzugsweise sind die Nase 18 und der Vorsprung 20 so ausgeführt, daß sich in der abgeklappten Stellung eine Flächenberührung zwischen den als Anschlagflächen dienenden Abschnitten der Nase und des Vorsprungs ergibt. In Figur 2 ist auch deutlich der Abstand s zu sehen, der im abgeklappten Zustand zwischen dem ersten und dem zweiten Teilarm vorliegt, so daß eine Beschädigung des ersten Teilarms durch eine Linienberührung mit dem zweiten Teilarm verhindert ist.

Wie in Figur 1 zu sehen ist, weist der zweite Teilarm 12 eine Aussparung 22 auf, die es ermöglicht, die Nase 18 vergleichsweise nah an der Achse 16 des Gelenkes anzuordnen, ohne daß ein Herunterklappen des zweiten Teilarmes in die Ausgangsstellung behindert wird.

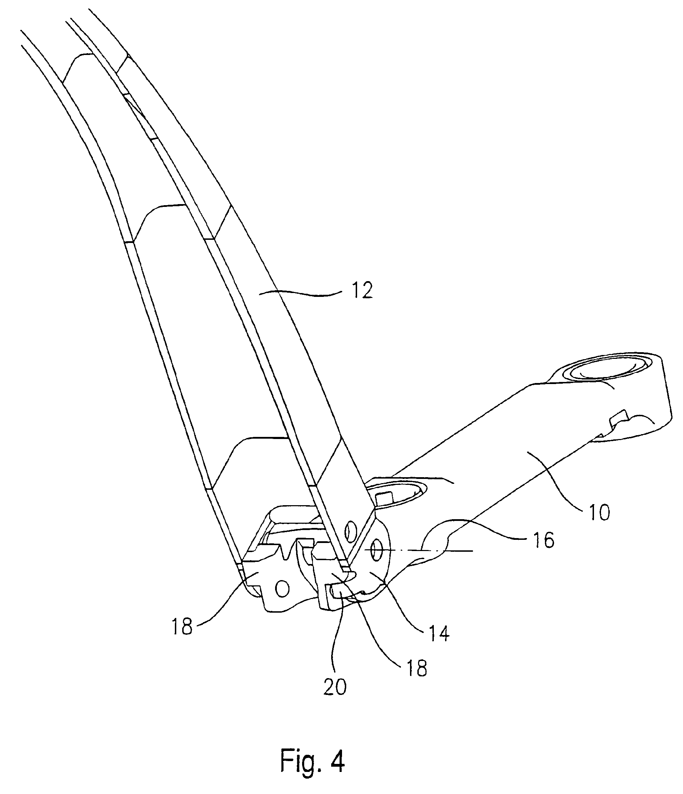

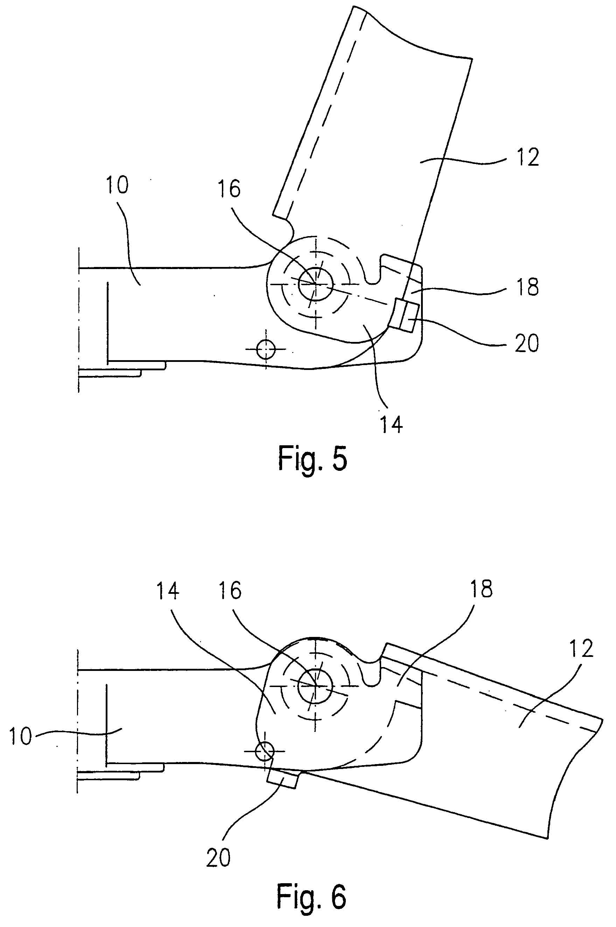

In den Figuren 4 bis 6 ist ein Scheibenwischerarm gemäß einer Ausführungsform der Erfindung gezeigt. Für die von dem Sheibenwischerarm nach den Figuren 1 bis 3 bekannten Bauteile werden dieselben Bezugszeichen verwendet, und es wird auf die obigen Erläuterungen verwiesen.

Im Unterschied zum Scheibenwischerarm nach den Figuren 1 bis 3 erstreckt sich bei der Ausführungsform der Erfindung der Vorsprung 20 an der Gelenklasche 14 nicht in derselben Ebene wie die Gelenklasche, sondern ist hakenförmig zur gegenüberliegenden Gelenklasche hin abgebogen. Aus diesem Grunde muß sich die Nase 18 am ersten Teilarm nicht mehr in die Ebene der Gelenklasche hinein erstrecken, sondern befindet sich vollständig innerhalb des von den Gelenklaschen begrenzten Bereichs.

Auch bei dieser Ausführungsform sind die Nase und der Vorsprung so ausgestaltet, daß sich dann, wenn der erste und der zweite Teilarm sich relativ zueinander in der abgeklappten Stellung befinden, eine Flächenberührung zwischen Vorsprung und Nase einstellt, so daß die abgeklappte Stellung präzise definiert ist.

Je nach Anwendungsfall können der Vorsprung und die Nase auf der einen oder anderen Seite des Gelenkes oder auch auf beiden Seiten des Gelenkes vorhanden sein. Es ist weiterhin möglich, die Anordnung von Vorsprung und Nase zu vertauschen, also die Nase am ersten Teilarm und den Vorsprung am zweiten Teilarm auszubilden.

### Bezugszeichenliste

- 10:: Teilarm
- 12:: Teilarm
- 14:: Gelenklasche
- 16:: Achse Gelenkbolzen
- 18:: Nase
- 20:: Vorsprung
- 22:: Aussparung
- s:: Abstand

## Patentansprüche

1. Scheibenwischerarm mit einem ersten Teilarm (10), einem zweiten Teilarm (12), der zwei Gelenklaschen (14) aufweist, die den ersten Teilarm (10) umgreifen, und einem Gelenk, das den ersten (10) und die Gelenklaschen (14) des zweiten Teilarms (12) klappbar miteinander verbindet, so daß die beiden Teilarme (10, 12) relativ zueinander aus einer Ausgangsstellung in eine abgeklappte Stellung verschwenkt werden können, wobei der erste Teilarm (10) mit mindestens einer Nase (18) und der zweite Teilarm (12) mit mindestens einem an einer Gelenklasche (14) ausgebildeten Vorsprung (20) versehen ist, die so angeordnet sind, daß sie aneinander in Anlage gelangen können, um ein Verschwenken der beiden Teilarme (10, 12) über die abgeklappte Stellung hinaus zu verhindern, und der Vorsprung (20) aus der Ebene der Gelenklasche (14) heraus zur anderen Gelenklasche (14) abgebogen ist, wobei am ersten Teilarm (10) nur für die abgeklappte Stellung ein definierter Anschlag (18, 20) für den zweiten Teilarm (12) ausgebildet ist.

2. Scheibenwischerarm nach Anspruch 1, **dadurch gekennzeichnet, daß** ein Vorsprung (20) und eine Nase (18) auf beiden Seiten des Gelenks vorhanden sind.

## Claims

1. Wiper arm with a first partial arm (10), a second partial arm (12), which has two articulation tabs (14) which engage around the first partial arm (10), and a joint which connects the first partial arm (10) and the articulation tabs (14) of the second partial arm (12) foldably to each other, so that the two partial arms (10, 12) can be pivoted relative to each other from a starting position into a folded-down position, the first partial arm (10) being provided with at least one lug (18) and the second partial arm (12) being provided with at least one projection (20) formed on an articulation tab (14), which lug and projection are arranged in such a manner that they bear against each other in order to prevent a pivoting of the two partial arms (10, 12) beyond the folded-down position, and the projection (20) is bent out of the plane of the articulation tab (14) to the other articulation tab (14), with a defined stop (18, 20) for the second partial arm (12) being formed on the first partial arm (10) only for the folded-down position.

2. Wiper arm according to Claim 1, **characterized in that** a projection (20) and a lug (18) are present on both sides of the joint.

## Revendications

1. Bras d'essuie-glace comportant une première partie de bras (10) et une seconde partie de bras (12) munie de deux pattes d'articulation (14) entourant la première partie de bras (10) et une articulation reliant la première partie (10) et l'axe d'articulation (14) de la seconde partie de bras (12) de manière rabattable de façon que les deux parties de bras (10, 12) puissent être basculées l'une par rapport à l'autre d'une position de repos dans une position rabattue,
la première partie de bras (10) ayant au moins un bec (18) et la seconde partie de bras (12) au moins une saillie (20) réalisée sur l'une des pattes (14), ces moyens étant disposés pour pouvoir se rencontrer et éviter le basculement des deux parties de bras (12, 12) au-delà de la position rabattue et la saillie (20) est recourbée hors du plan de l'axe d'articulation (14) vers l'autre patte d'articulation (14),
la première partie de bras (10) réalisant une butée définie (18, 20) pour la seconde partie de bras (12) seulement en position rabattue.

2. Bras d'essuie-glace selon la revendication 1,
**caractérisé par**
une saillie (12) et un bec (18) sur les deux côtés de l'articulation.
